# EUROPEAN PATENT APPLICATION

(11) **EP 4 693 662 A1**
(43) Date of publication of application: **11.02.2026**
(21) Application number: 23929508.2
(22) Date of filing: 31.03.2023
(51) Int. Cl.: H01M 50/258

(54) **BATTERY MODULE AND ELECTRIC DEVICE**

(71) Applicant: Xiamen Ampack Technology Limited, Xiamen City, Fujian Province, 361000 (CN)
(72) Inventor: NONG, Wenbin, Xiamen, Fujian 361000 (CN); LI, Kunlong, Xiamen, Fujian 361000 (CN); WANG, Pengfei, Xiamen, Fujian 361000 (CN)
(74) Representative: Icosa
(86) International application number: PCT/CN2023/085762
(87) International publication number: WO 2024/197925

(57) **Abstract**

This application discloses a battery module and an electric device. The battery module includes a plurality of cell units arranged along a first direction and a housing. Each cell unit includes a cell and a bracket. The cell includes an electrode assembly, a cell housing, and an electrode terminal connected to the electrode assembly and led out of the cell housing. The cell housing includes a body portion. The body portion includes a first wall and a second wall arranged along a second direction. The electrode assembly is disposed in the body portion. The bracket includes a first portion. The first portion covers at least a part of the first wall. The housing includes a bottom wall. The first portion is connected to the bottom wall. The bottom wall, the first portion, and the cell unit are arranged along the second direction, and along the first direction, the first portion is configured to be movable relative to the bottom wall. When the cell swells, the body portion is capable of moving relative to the bottom wall through the first portion, facilitating movement, protecting the body portion, and reducing the risk of affecting the use of the battery module due to damage to the body portion.

## Description

### TECHNICAL FIELD

This application relates to the field of energy storage technologies, and in particular, to a battery module and an electric device.

### BACKGROUND

At present, in a battery, a cell is typically fixed within a housing of the battery. When the cell swells, a part of a swelling cell housing may undergo displacement. The cell housing is fixed within the housing of the battery, and this is not conducive to the swelling of the cell, affecting the safety of battery use.

### SUMMARY

In view of this, it is necessary to provide a battery module and an electric device, where a cell is capable of moving relative to a housing, so that the cell is protected.

An embodiment of this application provides a battery module including a plurality of cell units arranged along a first direction and a housing. Each cell unit includes a cell and a bracket. The cell includes an electrode assembly, a cell housing, and an electrode terminal connected to the electrode assembly and led out of the cell housing. The cell housing includes a body portion. The body portion includes a first wall and a second wall arranged along a second direction. The electrode assembly is disposed in the body portion. The bracket includes a first portion. The first portion covers at least a part of the first wall. The housing includes a bottom wall. The first portion is connected to the bottom wall. The bottom wall, the first portion, and the cell unit are arranged along the second direction. Along the first direction, the first portion is configured to be movable relative to the bottom wall. When the cell swells, the body portion is capable of moving relative to the bottom wall through the first portion, and the first portion can reduce friction between the body portion and the bottom wall during movement, facilitating movement, protecting the body portion, and reducing the risk of affecting the use of the battery module due to damage to the body portion.

Optionally, in some embodiments of this application, the first portion is in direct contact with the bottom wall, and the cell moves relative to the bottom wall through the first portion.

Optionally, in some embodiments of this application, the cell housing includes a first sealing portion. The first sealing portion extends from the body portion. The first sealing portion includes a first connection portion. The bracket includes a second portion covering at least a part of the first connection portion. The electrode terminal extends from the first connection portion, and the second portion protects the first connection portion.

Optionally, in some embodiments of this application, the first sealing portion includes a first folded portion and a second folded portion disposed opposite to each other along the second direction. The first folded portion is connected to the second folded portion through the first connection portion. The bracket includes a first side portion covering the portion and a second side portion covering the portion, to protect the first folded portion and the second folded portion.

Optionally, in some embodiments of this application, when viewed along a direction opposite to a third direction, in the first direction, the first side portion does not extend beyond the first portion, and a first gap is formed between adjacent first side portions, reducing the force applied to the first side portion, thereby reducing the force applied to the first sealing portion, and facilitating protection for the first sealing portion. The first gap also facilitates heat dissipation of the cell.

Optionally, in some embodiments of this application, when viewed along a direction opposite to a third direction, in the first direction, the second side portion does not extend beyond the first portion, and a second gap is formed between adjacent second side portions, reducing the force applied to the second side portion, thereby further reducing the force applied to the first sealing portion, further facilitating protection for the first sealing portion. The second gap also facilitates heat dissipation of the cell.

Optionally, in some embodiments of this application, when viewed along the first direction, in the second direction, a part of the first connection portion is located between the body portion and the second portion. In the third direction, a part of the first connection portion is located between the first side portion and the second side portion. The bracket covers a part of the first connection portion, enhancing protection for the first connection portion. By positioning a part of the first connection portion between the body portion and the first portion and between the first side portion and the second side portion, a swelling space can be provided for the first sealing portion, facilitating pressure relief, reducing the impact of internal pressure of the cell on the first connection portion, reducing the influence on the sealing performance of the first sealing portion, and facilitating heat dissipation of the first sealing portion.

Optionally, in some embodiments of this application, the first side portion is in direct contact with the bottom wall, facilitating simultaneous movement of the first sealing portion and the body portion, and facilitating protection for the first sealing portion.

Optionally, in some embodiments of this application, the bottom wall is provided with a first limiting portion and a second limiting portion. The first limiting portion and the second limiting portion are spaced apart along the third direction. The first portion is located between the first limiting portion and the second limiting portion. The first limiting portion and the second limiting portion guide the movement of the cell unit.

Optionally, in some embodiments of this application, the housing includes a top wall. The bottom wall and the top wall are disposed opposite to each other along the second direction. The bracket includes two first portions, and the two first portions are disposed opposite to each other along the second direction. One of the two first portions is connected to the bottom wall, and is configured to be movable relative to the bottom wall. The other of the two first portions covers at least a part of the second wall and is connected to the top wall, and the other of the two first portions is configured to be movable relative to the top wall. By providing the first portions at both the first wall and the second wall, the first portions are capable of moving relative to the bottom wall and also capable of moving relative to the top wall, facilitating movement of the cell unit relative to the bottom wall and the top wall.

Optionally, in some embodiments of this application, the top wall is provided with a third limiting portion and a fourth limiting portion. The third limiting portion and the fourth limiting portion are spaced apart along the third direction. The first portion connected to the top wall is located between the third limiting portion and the fourth limiting portion. The third limiting portion and the fourth limiting portion guide the movement of the cell unit.

Optionally, in some embodiments of this application, a first elastic member is further included. In the first direction, the plurality of cell units and the first elastic member are arranged. The first elastic member is configured to provide a swelling space for the cell, buffering a compressive force applied to the cell assembly, and reducing the impact on the service life of the battery module.

Optionally, in some embodiments of this application, the first elastic member is configured to apply pressure to the plurality of cell units. Along the first direction, the plurality of cell units are in a pressurized state.

Optionally, in some embodiments of this application, the first elastic member includes a base portion and a folded portion. The base portion is connected to the folded portion. The folded portion is fixed to the housing. The base portion is configured to apply pressure to the plurality of cell units, and the folded portion is configured to provide a swelling space for the cell unit.

Optionally, in some embodiments of this application, the folded portion includes a first folded portion and a second folded portion. The first folded portion is disposed opposite to the second folded portion along the second direction. The first folded portion and the second folded portion are respectively connected to two opposite sides of the base portion. The first folded portion and the second folded portion can provide a swelling space for the cell unit.

Optionally, in some embodiments of this application, the first elastic member includes a first connection section. The first connection section is connected to a side of the first folded portion, the side of the first folded portion being a side facing away from the base portion. The first connection section is fixed to the housing, transferring the force applied to the folded portion to the housing.

Optionally, in some embodiments of this application, the first folded portion includes a first folded section and a second folded section. The first folded section is connected to the base portion and the second folded section. The second folded section is connected to the first connection section.

Optionally, in some embodiments of this application, the first connection section is parallel to the base portion, facilitating deformation of the elastic member in the first direction.

Optionally, in some embodiments of this application, the first folded section forms a first included angle A₁ with the base portion, the second folded section forms a second included angle B₁ with the first connection section, and A₁ ≥ B₁, helping to improve the deformation resistance of the first folded section and reducing the risk of deformation of the first elastic member in the first direction.

Optionally, in some embodiments of this application, the first folded section and the second folded section form a third included angle C₁, and C₁ > A₁, helping to improve uniform deformation of the first folded portion.

Optionally, in some embodiments of this application, C₁ = 2A₁ = 2B₁, helping to further improve uniform deformation of the first folded portion.

Optionally, in some embodiments of this application, the housing includes a first sidewall. The first sidewall is provided with a first fixed portion. Along the first direction, a projection of the first connection section overlaps a projection of the first fixed portion. The first connection section is fixed to the first fixed portion, transferring the force applied to the folded portion to the first sidewall.

Optionally, in some embodiments of this application, structural strength of the first sidewall is greater than structural strength of the first elastic member, reducing the risk of deformation of the first sidewall due to the force applied to the first folded portion.

Optionally, in some embodiments of this application, the first elastic member includes a second connection section. The second connection section is connected to a side of the second folded portion away from the base portion. The second connection section is fixed to the housing, transferring the force applied to the folded portion to the housing.

Optionally, in some embodiments of this application, the second connection section is parallel to the base portion, facilitating deformation of the first elastic member in the first direction.

Optionally, in some embodiments of this application, the bottom wall is provided with a third fixed portion. Along the first direction, a projection of the second connection section overlaps a projection of the third fixed portion. The second connection section is fixed to the third fixed portion, transferring the force applied to the folded portion to the bottom wall.

Optionally, in some embodiments of this application, the first folded portion and the second folded portion have a same structure, facilitating uniform force distribution and uniform deformation.

Optionally, in some embodiments of this application, along the second direction, a third gap exists between the first wall and the bottom wall, facilitating movement of the first portion relative to the bottom wall.

Optionally, in some embodiments of this application, a filler member is further included, and the filler member is disposed in the third gap. The filler member can protect a part of the first wall that is not provided with the first portion.

Optionally, in some embodiments of this application, a fourth gap exists between the top wall and the second wall, and the filler member is disposed in the fourth gap, protecting a part of the second wall that is not provided with the first portion.

Optionally, in some embodiments of this application, body portions of adjacent cell housings are in direct contact, facilitating pressure application to each other.

Optionally, in some embodiments of this application, the cell housing includes a third wall and a fourth wall. Along the first direction, the third wall is opposite the fourth wall. When viewed along a direction opposite to the third direction, in the first direction, the first portion does not extend beyond the third wall, and the first portion does not extend beyond the fourth wall. When the body portions of adjacent cells apply pressure to each other, the force applied to the bracket can be reduced, enhancing the connection strength between the bracket and the cell.

Optionally, in some embodiments of this application, the electrode assembly is a wound structure including a first straight section, a second straight section, a first curved section, and a second curved section. The first straight section connects the first curved section and the second curved section, and the second straight section connects the first curved section and the second curved section. Along the first direction, a projection of the third wall covers a projection of the first straight section, and a projection of the fourth wall covers a projection of the second straight section, facilitating uniform application of pressure between the cells, thereby further prolonging the service life of the cell.

Optionally, in some embodiments of this application, along the first direction, a projection of the first portion overlaps a projection of the first curved section, the projection of the first portion and a projection of the first straight section are spaced apart from each other, and the projection of the first portion and a projection of the second straight section are spaced apart from each other, facilitating uniform application of pressure between the cells, thereby further prolonging the service life of the cell.

Optionally, in some embodiments of this application, the bracket is integrally formed with the cell, enhancing the connection strength between the bracket and the cell.

Optionally, in some embodiments of this application, the bracket is an insulating bracket, reducing the risk of a short circuit between the bracket and the cell.

Optionally, in some embodiments of this application, the cell includes a prismatic-housing cell.

Optionally, in some embodiments of this application, when viewed along a direction opposite to the third direction, in the first direction, the second portion is located between the third wall and the fourth wall. When the body portions of adjacent cells apply pressure to each other, the force applied to the first sealing portion can be reduced, enhancing protection for the first sealing portion.

Optionally, in some embodiments of this application, when viewed along a direction opposite to the third direction, in the first direction, the first side portion is located between the third wall and the fourth wall. When the body portions of adjacent cells apply pressure to each other, the force applied to the first sealing portion can be reduced, enhancing protection for the first sealing portion.

Optionally, in some embodiments of this application, when viewed along a direction opposite to the third direction, in the first direction, the second side portion is located between the third wall and the fourth wall. When the body portions of adjacent cells apply pressure to each other, the force applied to the first sealing portion can be reduced, enhancing protection for the first sealing portion.

Optionally, in some embodiments of this application, a side of the first portion in contact with the bottom wall is provided with a sliding member. The sliding member can reduce a contact area between the first portion and the bottom wall, facilitating movement of the first portion relative to the bottom wall.

Optionally, in some embodiments of this application, the first portion connects two ends of the first wall along the third direction, facilitating movement of the cell unit relative to the bottom wall.

Optionally, in some embodiments of this application, along the third direction, the first portion covers the entire first wall, enhancing protection for the first wall by the first portion.

Optionally, in some embodiments of this application, the first portion covers a part of the first wall and a part of a second sealing portion, protecting the first wall and the second sealing portion.

Optionally, in some embodiments of this application, the first portion covers a part of the second wall and a part of a second sealing portion, protecting the second wall and the second sealing portion.

Optionally, in some embodiments of this application, a second elastic member is disposed between the first elastic member and the cell. When the cell swells, the second elastic member is capable of being compressed, further providing a swelling space for the cell and further applying pressure to the cell.

Optionally, in some embodiments of this application, a third elastic member is disposed between a rear wall and the cell. When the cell swells, the third elastic member is capable of being compressed, further providing a swelling space for the cell and further applying pressure to the cell.

An embodiment of this application further provides an electric device including the battery module according to any one of the foregoing embodiments.

The battery module and a body portion of the electric device are capable of moving relative to the bottom wall through the first portion, and the first portion can reduce friction between the body portion and the bottom wall during movement, facilitating movement, protecting the body portion, and reducing the risk of affecting the use of the battery module due to damage to the body portion.

### BRIEF DESCRIPTION OF DRAWINGS

FIG. 1 is a schematic structural diagram of a battery module according to some embodiments.
FIG. 2 is a schematic exploded view of a battery module according to some embodiments.
FIG. 3 is a schematic structural diagram of a cell and a bracket according to some embodiments.
FIG. 4 is a schematic partial structural diagram of a battery module according to some embodiments.
FIG. 5 is a schematic structural diagram of a cell unit according to some embodiments.
FIG. 6 is a schematic partial enlarged view of a cell unit according to some embodiments.
FIG. 7 is a schematic cross-sectional view of the battery module in FIG. 1 along II-II.
FIG. 8 is a schematic structural diagram of a cell according to some embodiments.
FIG. 9 is a schematic structural diagram of a cell viewed along a direction Z' opposite to a third direction Z according to some embodiments.
FIG. 10 is a schematic exploded view of a cell according to some embodiments.
FIG. 11 is a schematic structural diagram of a cell according to some other embodiments.
FIG. 12 is a schematic structural diagram of a cell viewed along a direction Z' opposite to a third direction Z according to some embodiments.
FIG. 13 is a schematic structural diagram of a prismatic-housing cell according to some embodiments.
FIG. 14 is a schematic structural diagram of an electrode assembly according to some embodiments.
FIG. 15 is a schematic structural diagram of a cell and a bracket according to some embodiments.
FIG. 16 is a schematic structural diagram of a cell and a bracket from another perspective according to some embodiments.
FIG. 17 is a schematic structural diagram of a cell unit viewed along a direction Z' opposite to a third direction Z according to some embodiments.
FIG. 18 is a schematic cross-sectional view of the cell unit in FIG. 15 along IV-IV.
FIG. 19 is a schematic partial enlarged view of a cell and a bracket according to some embodiments.
FIG. 20 is a schematic partial enlarged view of another part of a cell and a bracket according to some embodiments.
FIG. 21 is a schematic structural diagram of a top wall according to some embodiments.
FIG. 22 is a schematic partial structural diagram of a housing according to some embodiments.
FIG. 23 is a schematic structural diagram of a first elastic member according to some embodiments.
FIG. 24 is a schematic cross-sectional view of the battery module in FIG. 1 along III-III.
FIG. 25 is a schematic cross-sectional view of a battery module along III-III according to some other embodiments.
FIG. 26 is a schematic diagram of an electric device according to some embodiments.

Reference signs of main components:

| | |
|---|---|
| Battery module | 100 |
| Cell unit | 10 |
| Cell | 11 |
| Cell housing | 11a |
| Body portion | 111 |
| First wall | 111a |
| Second wall | 111b |
| Third wall | 111c |
| Fourth wall | 111d |
| Fifth wall | 111e |
| Sixth wall | 111f |
| First housing | 1111 |
| First recess | 1111a |
| Second housing | 1112 |
| Second recess | 1112a |
| First extension side | 1113 |
| Second extension side | 1114 |
| First sealing portion | 112 |
| First connection portion | 112a |
| Second connection portion | 112b |
| Third connection portion | 112c |
| Second sealing portion | 113 |
| Electrode assembly | 11b |
| Electrode terminal | 11c |
| Bracket | 12 |
| First portion | 121 |
| First protrusion | 1211 |
| Third recess | 1212 |
| Second portion | 122 |
| First side portion | 123 |
| First gap | 123a |
| Second side portion | 124 |
| Second gap | 124a |
| Fourth connection portion | 125 |
| Third portion | 126 |
| Housing | 20 |
| First space | 20a |
| Bottom wall | 21 |
| First limiting portion | 211 |
| Second limiting portion | 212 |
| Third fixed portion | 213 |
| Third gap | 21a |
| Fourth gap | 21b |
| Top wall | 22 |
| Third limiting portion | 221 |
| Fourth limiting portion | 222 |
| Rear wall | 23 |
| Front wall | 24 |
| First sidewall | 25 |
| First fixed portion | 251 |
| Second sidewall | 26 |
| Second fixed portion | 261 |
| Filler member | 30 |
| First elastic member | 40 |
| Base portion | 41 |
| Folded portion | 42 |
| First folded portion | 421 |
| First folded section | 421a |
| Second folded section | 421b |
| Second folded portion | 422 |
| Third folded section | 422a |
| Fourth folded section | 422b |
| First connection section | 43 |
| Second connection section | 44 |
| Second elastic member | 45 |
| Third elastic member | 46 |
| Electric device | 200 |
| First direction | X |
| Second direction | Y |
| Third direction | Z |

This application is further described using some following specific embodiments in conjunction with the foregoing drawings.

### DETAILED DESCRIPTION OF EMBODIMENTS

Some following specific embodiments are exemplary and not restrictive, aiming to provide a basic understanding of this application but not to confirm critical or decisive elements of this application and not to limit the scope of protection. As long as there is no structural conflict, the technical features mentioned in some embodiments can be combined in any manner.

When one component is described as being "disposed at" another component, the component may be directly disposed at the another component or there may be a component therebetween. When one component is described as being "connected to" another component, the component may be connected to the another component directly or thereby may be a component therebetween.

It should be understood that the terms "perpendicular" and "identical to" are used to describe an ideal state of two components. During actual production or use, two components may be in a state of being approximately perpendicular or identical to each other. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

The term "parallel" is used to describe an ideal state of two components. During actual production or use, two components may be in a state of being approximately parallel to each other. For example, with reference to the description of numerical values, "parallel" may indicate that an included angle between two straight lines is within a range of 180°±10°, "parallel" may alternatively indicate that a dihedral angle of two planes is within a range of 180°±10°, and "parallel" may further alternatively indicate that an included angle between a straight line and a plane is within a range of 180°±10°. Two components described as "parallel" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, the term "a plurality of" in the specification indicates that there are two or more components when used for describing the number of components.

In a first direction X, the first direction X and a direction opposite to the first direction X are included. In a second direction Y, the second direction Y and a direction opposite to the second direction Y are included. In a third direction Z, the third direction Z and a direction opposite to the third direction Z are included.

For ease of description, some electrode terminals 11c are not folded.

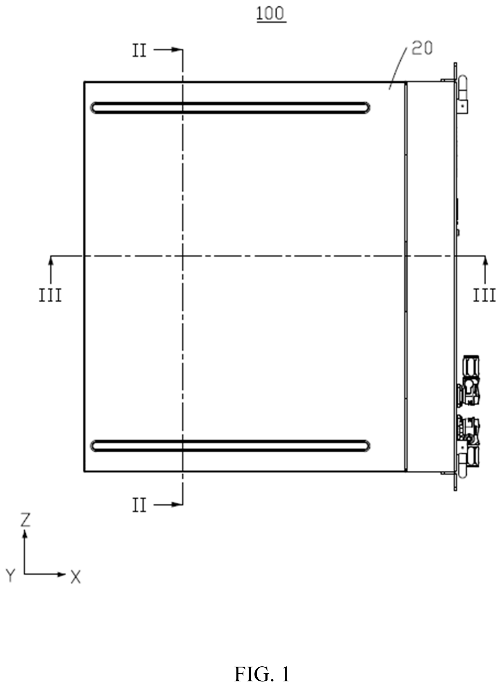

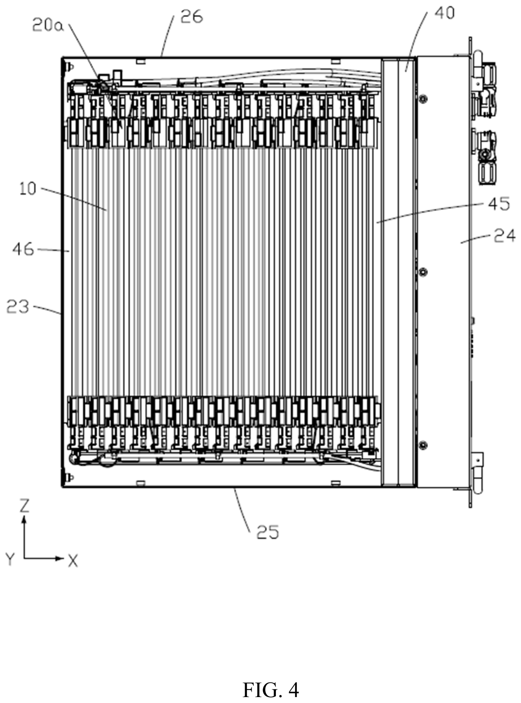

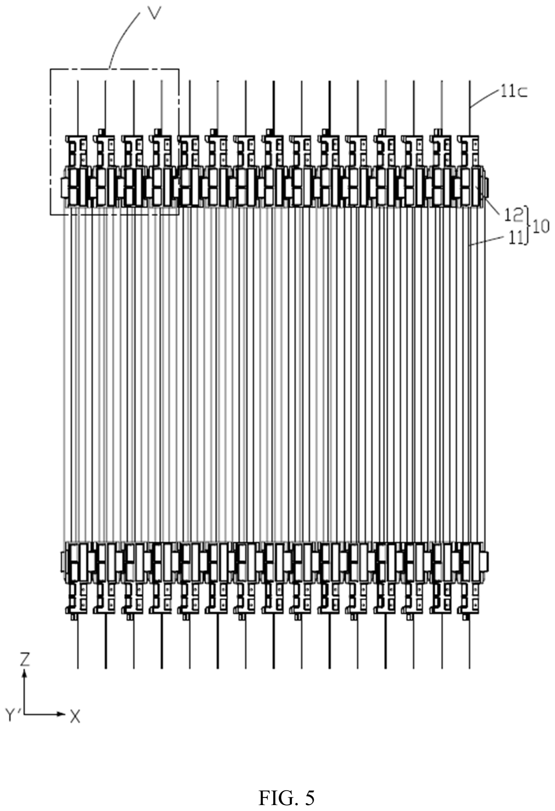

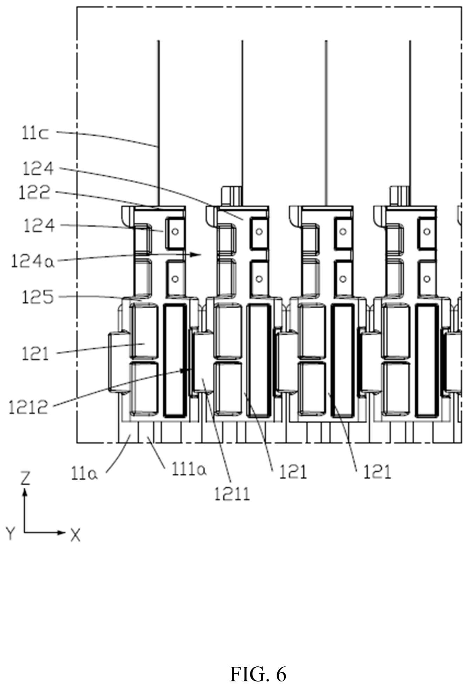

Referring to FIG. 1 to FIG. 8, an embodiment of this application provides a battery module 100 including a plurality of cell units 10 and a housing 20. The plurality of cell units 10 are arranged along a first direction X, each cell unit 10 includes a cell 11 and a bracket 12, and the bracket 12 is connected to the cell 11. The cell 11 includes a cell housing 11a, an electrode assembly 11b, and an electrode terminal 11c connected to the electrode assembly 11b and led out of the cell housing 11a. The cell housing 11a includes a body portion 111, and the electrode assembly 11b is disposed in the body portion 111. The body portion 111 includes a first wall 111a and a second wall 111b arranged along a second direction Y. The bracket 12 includes a first portion 121, and the first portion 121 covers at least a part of the first wall 111a. The housing 20 includes a bottom wall 21, and the bottom wall 21, the first portion 121, and the cell unit 10 are arranged along the second direction Y. The first portion 121 is connected to the bottom wall 21. Along the first direction X, the first portion 121 is configured to be movable relative to the bottom wall 21. When the cell 11 swells, the body portion 111 is capable of moving relative to the bottom wall 21 through the first portion 121, and the first portion 121 can reduce friction between the body portion 111 and the bottom wall 21 during movement, facilitating movement, protecting the body portion 111, and reducing the risk of affecting the use of the battery module 100 due to damage to the body portion 111.

In an embodiment, the bracket 12 is integrally formed with the cell 11, enhancing the connection strength between the bracket 12 and the cell 11. Optionally, the bracket 12 is integrally formed with the cell 11 through low-pressure injection molding.

In an embodiment, the bracket 12 is an insulating bracket, reducing the risk of a short circuit between the bracket 12 and the cell 11.

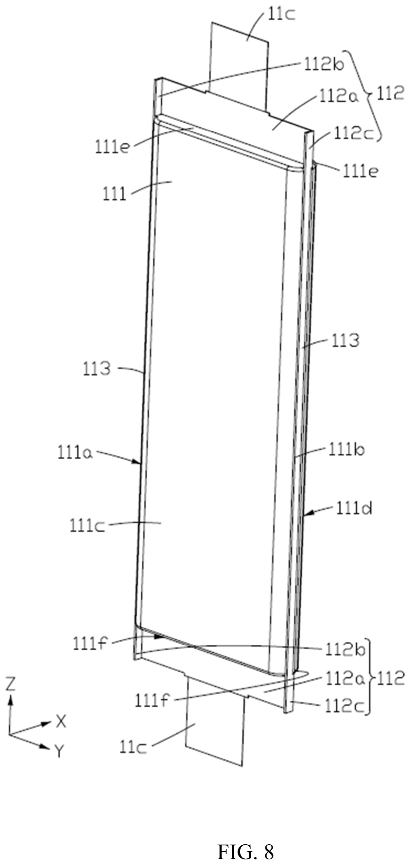

Referring to FIG. 8 to FIG. 11, in an embodiment, the cell 11 includes a pouch cell. The body portion 111 is provided with an accommodation space, and the body portion 111 includes a first housing 1111 and a second housing 1112. The first housing 1111 is provided with a first recess 1111a, and the second housing 1112 is provided with a second recess 1112a. The first housing 1111 is connected to the second housing 1112, forming the accommodation space. A part of the electrode assembly 11b is disposed in the first recess 1111a, and another part is disposed in the second recess 1112a. A peripheral side of the first housing 1111 extends outward to form a first extension side 1113, and a peripheral side of the second housing 1112 extends outward to form a second extension side 1114. After the first housing 1111 is connected to the second housing 1112, the first extension side 1113 and the second extension side 1114 overlap and are hermetically connected, forming two first sealing portions 112 and two second sealing portions 113. The two first sealing portions 112 are disposed along a third direction Z, and the two second sealing portions 113 are disposed along a second direction Y. One of the two first sealing portions 112 is connected to the two second sealing portions 113, and the other first sealing portion 112 is connected to the two second sealing portions 113.

In an embodiment, the first extension side 1113 and the second extension side 1114 overlap and are hermetically connected, forming one first sealing portion 112 and two second sealing portions 113. The two second sealing portions 113 are disposed along the second direction Y, and the first sealing portion 112 is connected to the two second sealing portions 113.

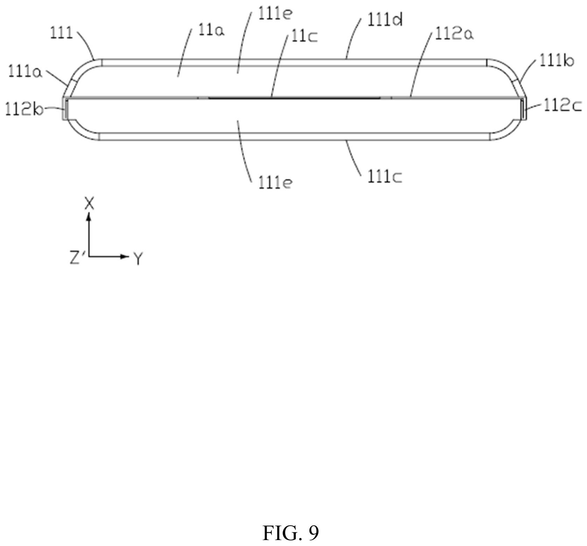

Referring to FIG. 8 and FIG. 9, in an embodiment, the body portion 111 further includes a third wall 111c and a fourth wall 111d. Along the first direction X, the third wall 111c and the fourth wall 111d are disposed opposite to each other. The second sealing portion 113 is connected to the first wall 111a, and the other second sealing portion 113 is connected to the second wall 111b.

Referring to FIG. 8 and FIG. 9, in an embodiment, the body portion 111 further includes a fifth wall 111e and a sixth wall 111f. The sixth wall 111f and the fifth wall 111e are disposed along the third direction Z. The first sealing portion 112 is connected to the fifth wall 111e, and the other first sealing portion 112 is connected to the sixth wall 111f. The third direction Z is perpendicular to both the first direction X and the second direction Y. The fifth wall 111e connects the third wall 111c and one first sealing portion 112, and the sixth wall 111f connects the third wall 111c and another first sealing portion 112.

Referring to FIG. 8, in an embodiment, the cell 11 includes two electrode terminals 11c. One electrode terminal 11c extends out of the cell housing 11a from the first sealing portion 112, and the other electrode terminal 11c extends out of the cell housing 11a from the other first sealing portion 112.

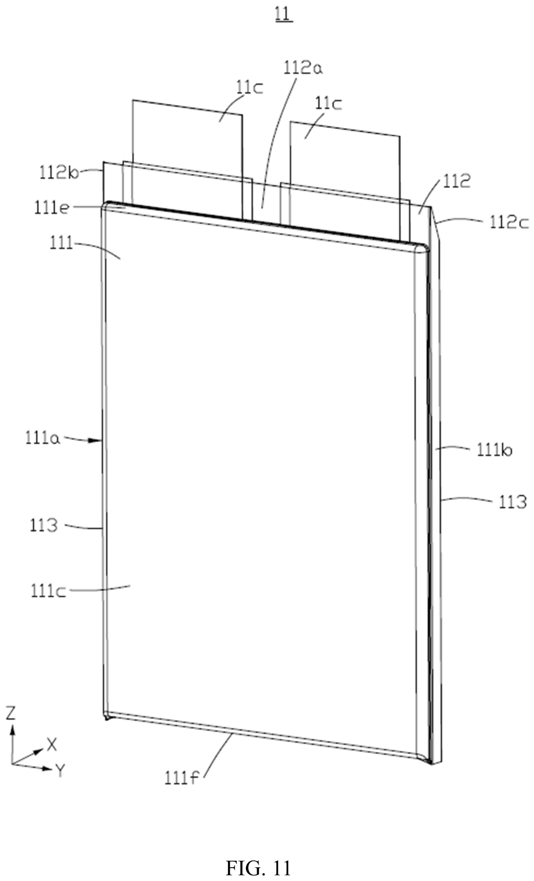

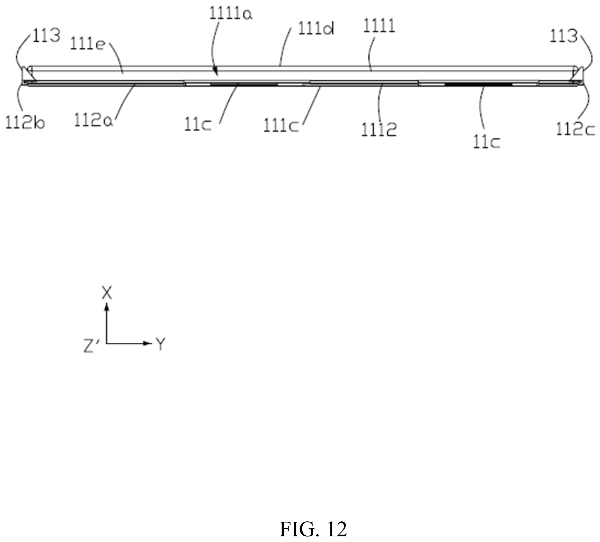

Referring to FIG. 11 and FIG. 12, in an embodiment, the cell 11 includes two electrode terminals 11c, and the two electrode terminals 11c extend out of the cell housing 11a from the same first sealing portion 112.

Referring to FIG. 12, in an embodiment, the body portion 111 is provided with an accommodation space. The body portion 111 includes a first housing 1111 and a second housing 1112. The first housing 1111 is provided with a first recess 1111a, and the second housing 1112 is flat. The first housing 1111 is connected to the second housing 1112, forming the accommodation space. The electrode assembly 11b is disposed in the first recess 1111a.

In an embodiment, the body portion 111 includes two fifth walls 111e, a sixth wall 111f, and a first sealing portion 112. The body portion 111 is provided with an accommodation space. The body portion 111 includes a first housing 1111 and a second housing 1112. The first housing 1111 is connected to the second housing 1112. The first housing 1111 is provided with a first recess 1111a, and the second housing 1112 is provided with a second recess 1112a, forming the accommodation space. The electrode assembly 11b is disposed in the first recess 1111a and the second recess 1112a. The two electrode terminals 11c extend out of the cell housing 11a from the same first sealing portion 112.

Optionally, there is one sixth wall 111f and one first sealing portion 112. One fifth wall 111e connects the third wall 111c and the first sealing portion 112, and the other fifth wall 111e connects the fourth wall 111d and the first sealing portion 112. When viewed along a direction Z' opposite to the third direction Z, in the first direction X, the two fifth walls 111e are located on two opposite sides of the first sealing portion 112. In the first direction X, the first direction X and a direction opposite to the first direction X are included.

Optionally, there are two sixth walls 111f and two first sealing portions 112. One fifth wall 111e connects the third wall 111c and the first sealing portion 112, and the other fifth wall 111e connects the fourth wall 111d and the first sealing portion 112. When viewed along the direction Z' opposite to the third direction Z, in the first direction X, the two fifth walls 111e are connected and located at two opposite sides of the first sealing portion 112. One sixth wall 111f connects the third wall 111c and the other first sealing portion 112, and the other sixth wall 111f connects the fourth wall 111d and the other first sealing portion 112. When viewed along the third direction Z, in the first direction X, the two sixth walls 111f are located on two opposite sides of the first sealing portion 112.

Referring to FIG. 8 to FIG. 9, in an embodiment, the body portion 111 includes two fifth walls 111e, two sixth walls 111f, and two first sealing portions 112. One fifth wall 111e connects the third wall 111c and one first sealing portion 112, and the other fifth wall 111e connects the fourth wall 111d and one first sealing portion 112. One sixth wall 111f connects the third wall 111c and the other first sealing portion 112, and the other sixth wall 111f connects the fourth wall 111d and the first sealing portion 112. One electrode terminal 11c extends out of the cell housing 11a from one first sealing portion 112, and the other electrode terminal 11c extends out of the cell housing 11a from the other first sealing portion 112.

When viewed along the direction Z' opposite to the third direction Z, in the first direction X, the two fifth walls 111e are located on two opposite sides of the first sealing portion 112. When viewed along the third direction Z, in the first direction X, the two sixth walls 111f are located on two opposite sides of the second sealing portion 113.

In an embodiment, the body portion 111 includes one fifth wall 111e, one sixth wall 111f, and two first sealing portions 112. The fifth wall 111e connects the third wall 111c and the first sealing portion 112, and the sixth wall 111f connects the third wall 111c and the first sealing portion 112. The body portion 111 is provided with an accommodation space. The body portion 111 includes a first housing 1111 and a second housing 1112. The first housing 1111 is provided with a first recess 1111a, and the second housing 1112 is flat. The first housing 1111 is connected to the second housing 1112, forming the accommodation space. The electrode assembly 11b is disposed in the first recess 1111a. One electrode terminal 11c extends out of the cell housing 11a from one first sealing portion 112, and the other electrode terminal 11c extends out of the cell housing 11a from the other first sealing portion 112.

Referring to FIG. 12, in an embodiment, the body portion 111 includes one fifth wall 111e, one sixth wall 111f, and the first sealing portion 112. The body portion 111 is provided with an accommodation space. The body portion 111 includes a first housing 1111 and a second housing 1112. The first housing 1111 is provided with a first recess 1111a, and the second housing 1112 is flat. The first housing 1111 is connected to the second housing 1112, forming the accommodation space. The electrode assembly 11b is disposed in the first recess 1111a. The two electrode terminals 11c extend out of the cell housing 11a from the same first sealing portion 112. Optionally, there is one first sealing portion 112, the fifth wall 111e connects the third wall 111c and the first sealing portion 112, and the sixth wall 111f is connected to the third wall 111c. When there are two first sealing portions 112, the fifth wall 111e connects the third wall 111c and the first sealing portion 112, and the sixth wall 111f connects the third wall 111c and the other first sealing portion 112.

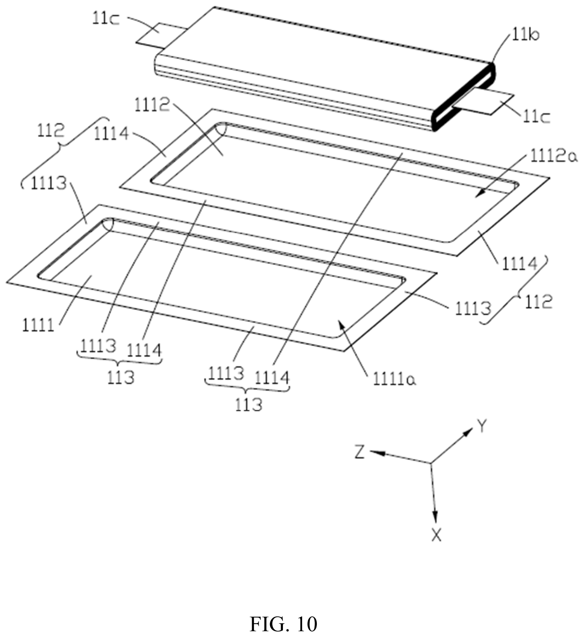

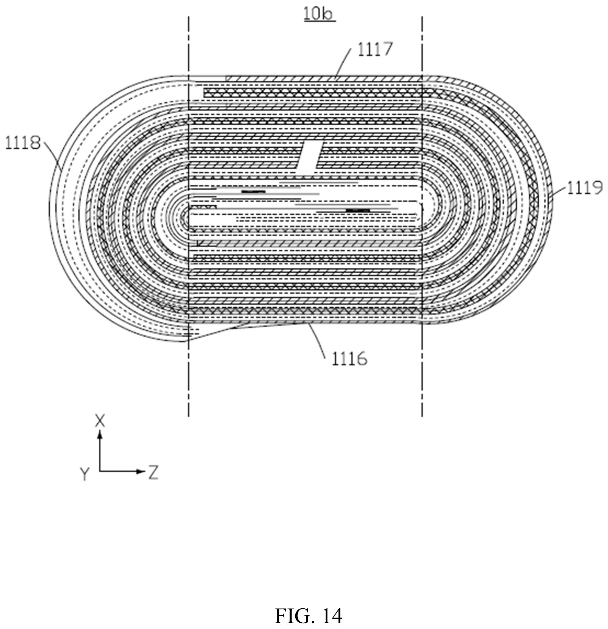

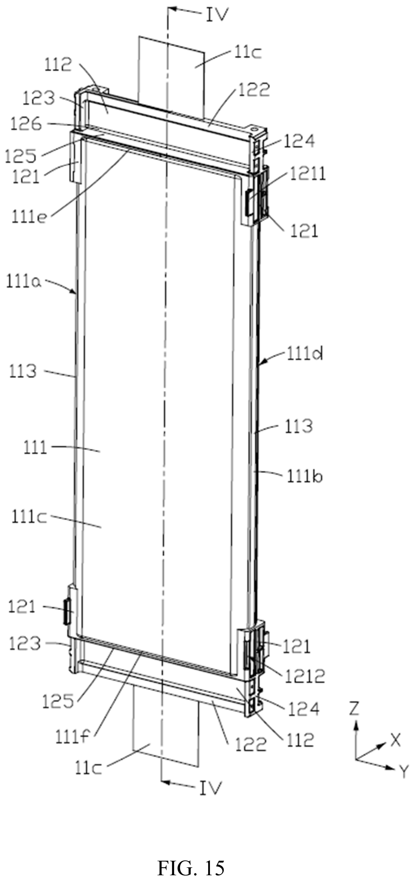

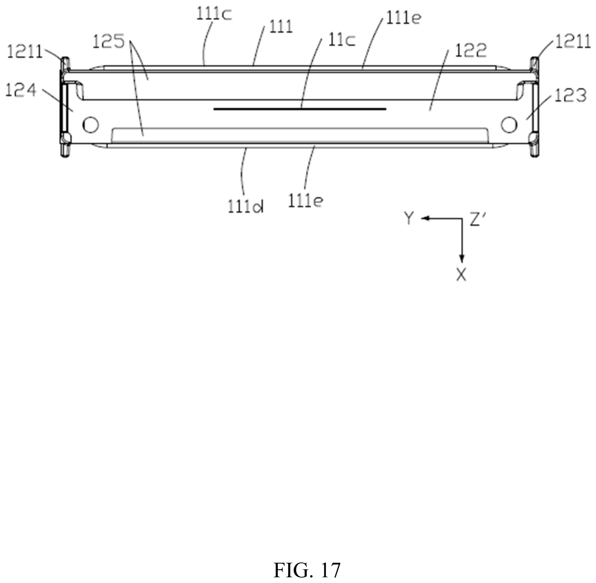

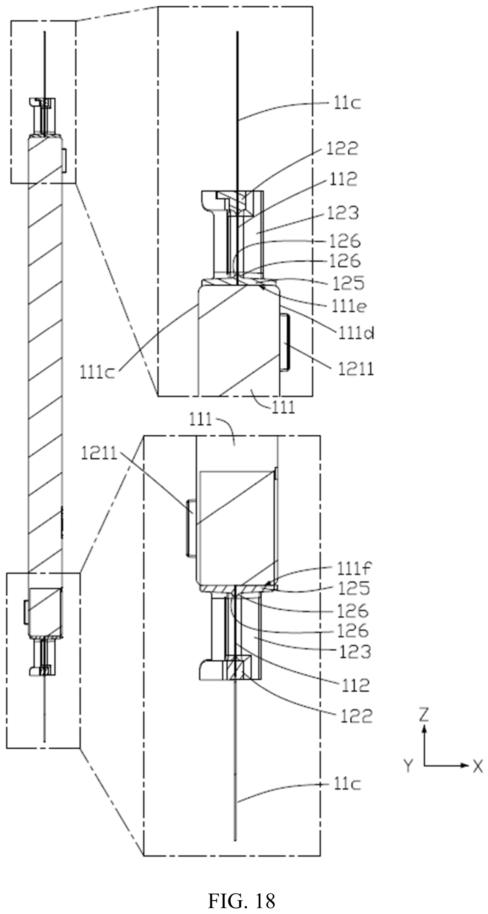

Referring to FIG. 10 and FIG. 14 to FIG. 18, in an embodiment, the electrode assembly 11b is a wound structure, and the electrode assembly 11b includes a first straight section 1116, a second straight section 1117, a first curved section 1118, and a second curved section 1119. The first straight section 1116 connects the first curved section 1118 and the second curved section 1119, and the second straight section 1117 connects the first curved section 1118 and the second curved section 1119. Along the first direction X, a projection of the third wall 111c covers a projection of the first straight section 1116, a projection of the fourth wall 111d covers a projection of the first straight section 1116, a projection of the third wall 111c covers a projection of the second straight section 1117, and a projection of the fourth wall 111d covers a projection of the second straight section 1117, facilitating uniform application of pressure between the cells 11, thereby further prolonging the service life of the cell 11.

In an embodiment, along the first direction X, a projection of the first portion 121 overlaps a projection of the first curved section 1118, the projection of the first portion 121 and a projection of the first straight section 1116 are spaced apart from each other, and the projection of the first portion 121 and a projection of the second straight section 1117 are spaced apart from each other. The first portion 121 can protect the first curved section 1118, facilitating uniform application of pressure between the cells 11, thereby further prolonging the service life of the cell 11.

In an embodiment, the bracket includes two first portions. A projection of the other first portion 121 overlaps a projection of the second curved section 1119, the projection of the first portion 121 and a projection of the first straight section 1116 are spaced apart from each other, and the projection of the first portion 121 and a projection of the second straight section 1117 are spaced apart from each other. The first portion 121 can protect the second curved section 1119, facilitating uniform application of pressure between the cells 11, thereby further prolonging the service life of the cell 11.

In an embodiment, when viewed along the direction Z' opposite to the third direction Z, in the first direction X, the first portion 121 does not extend beyond the third wall 111c, and the first portion 121 does not extend beyond the fourth wall 111d. When the body portions 111 of adjacent cells 11 apply pressure to each other, the force applied to the bracket 12 can be reduced, enhancing the connection strength between the bracket 12 and the cell 11.

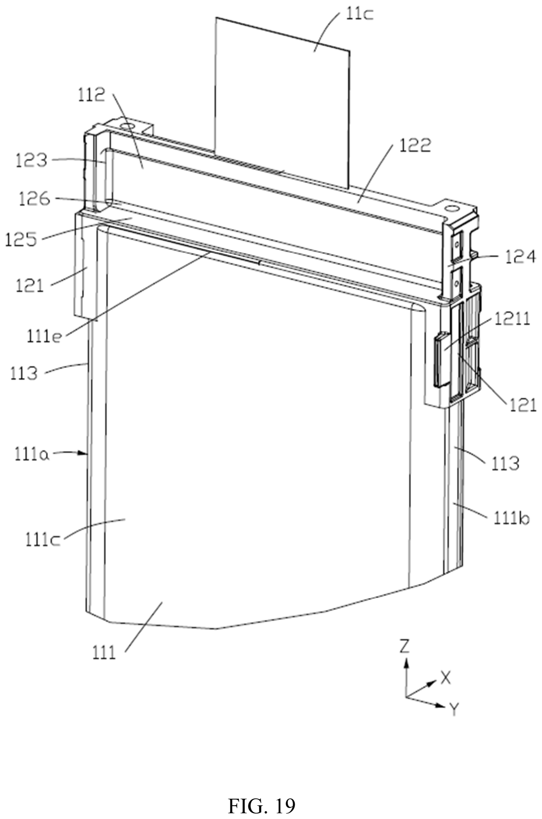

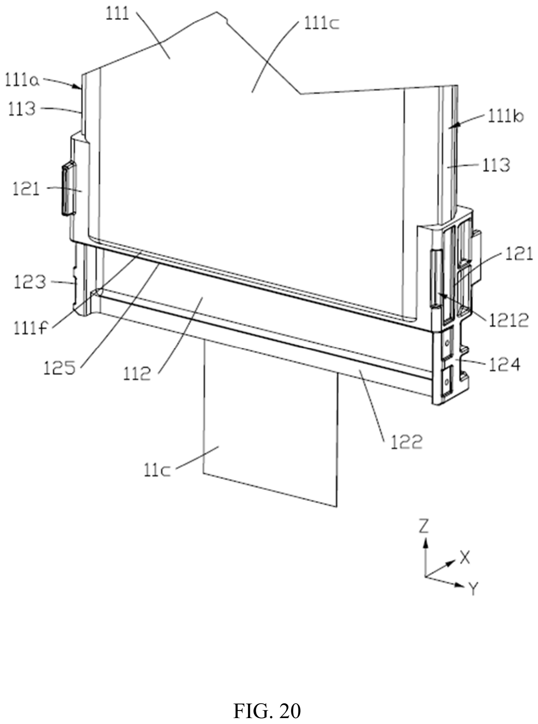

Referring to FIG. 8 and FIG. 15 to FIG. 20, in an embodiment, the first sealing portion 112 extends from the body portion 111. The first sealing portion 112 includes a first connection portion 112a, and the electrode terminal 11c extends out of the cell housing 11a from the first connection portion 112a. The bracket 12 covers at least a part of the first connection portion 112a, to protect the first connection portion 112a.

In an embodiment, the bracket 12 includes a second portion 122. The second portion 122 covers a part of the first connection portion 112a, and the electrode terminal 11c extends from the second portion 122, to protect a part of the first connection portion 112a.

In an embodiment, when viewed along the direction Z' opposite to the third direction Z, in the first direction X, the second portion 122 is located between the third wall 111c and the fourth wall 111d. When the body portions 111 of adjacent cells 11 apply pressure to each other, the force applied to the first sealing portion 112 can be reduced, enhancing protection for the first sealing portion 112.

In an embodiment, the first sealing portion 112 includes a second connection portion 112b and a third connection portion 112c. The second connection portion 112b and the third connection portion 112c are disposed opposite to each other along the second direction Y. The second connection portion 112b is connected to the third connection portion 112c through the first connection portion 112a.

In an embodiment, the bracket 12 includes a first side portion 123 and a second side portion 124. One end of the second portion 122 is connected to the first side portion 123, and another end is connected to the second side portion 124, enhancing the structural strength of the bracket 12. The first side portion 123 covers the second connection portion 112b, and the second side portion 124 covers the third connection portion 112c, achieving protection for the first sealing portion 112.

In an embodiment, the first side portion 123 covers a joint between the first connection portion 112a and the second connection portion 112b, helping to enhance protection for the first sealing portion 112.

In an embodiment, the second side portion 124 covers a joint between the first connection portion 112a and the third connection portion 112c, helping to enhance protection for the first sealing portion 112.

In an embodiment, the first side portion 123 is in direct contact with the bottom wall 21, facilitating simultaneous movement of the first sealing portion 112 and the body portion 111, and facilitating protection for the first sealing portion 112.

In an embodiment, when viewed along the direction Z' opposite to the third direction Z, in the first direction X, the first side portion 123 is located between the third wall 111c and the fourth wall 111d. When the body portions 111 of adjacent cells 11 apply pressure to each other, the force applied to the first sealing portion 112 can be reduced, enhancing protection for the first sealing portion 112.

In an embodiment, when viewed along the direction Z' opposite to the third direction Z, in the first direction X, the second side portion 124 is located between the third wall 111c and the fourth wall 111d. When the body portions 111 of adjacent cells 11 apply pressure to each other, the force applied to the first sealing portion 112 can be reduced, enhancing protection for the first sealing portion 112.

In an embodiment, along the third direction Z, a projection of the first side portion 123 overlaps a projection of the first curved section 1118, the projection of the first side portion 123 and a projection of the first straight section 1116 are spaced apart from each other, and the projection of the first side portion 123 and a projection of the second straight section 1117 are spaced apart from each other, facilitating pressure relief of the cell 11.

In an embodiment, along the third direction Z, a projection of the second side portion 124 overlaps a projection of the second curved section 1119, the projection of the second side portion 124 and the projection of the first straight section 1116 are spaced apart from each other, and the projection of the second side portion 124 and a projection of the second straight section 1117 are spaced apart from each other, facilitating pressure relief of the cell 11.

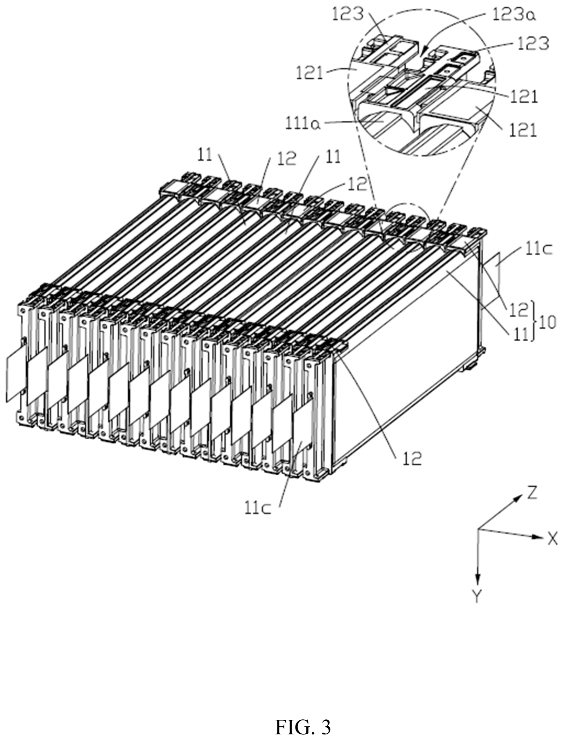

Referring to FIG. 3 to FIG. 6 and FIG. 18, in an embodiment, when viewed along the direction Z' opposite to the third direction Z, in the first direction X, the first side portion 123 does not extend beyond the first portion 121, and a first gap 123a is formed between adjacent first side portions 123. When adjacent cell housings 11a are in direct contact and apply pressure to each other, the force applied to the first side portion 123 can be reduced, thereby reducing the force applied to the first sealing portion 112 and facilitating protection for the first sealing portion 112. The first gap 123a also facilitates heat dissipation of the cell 11.

Referring to FIG. 3 to FIG. 6 and FIG. 18, in an embodiment, when viewed along the direction Z' opposite to the third direction Z, in the first direction X, the second side portion 124 does not extend beyond the first portion 121, and a second gap 124a is formed between adjacent second side portions 124. When adjacent cell housings 11a are in direct contact with each other and apply pressure to each other, the force applied to the second side portion 124 can be reduced, thereby further reducing the force applied to the first sealing portion 112 and further facilitating protection for the first sealing portion 112. The second gap 124a also facilitates heat dissipation of the cell 11.

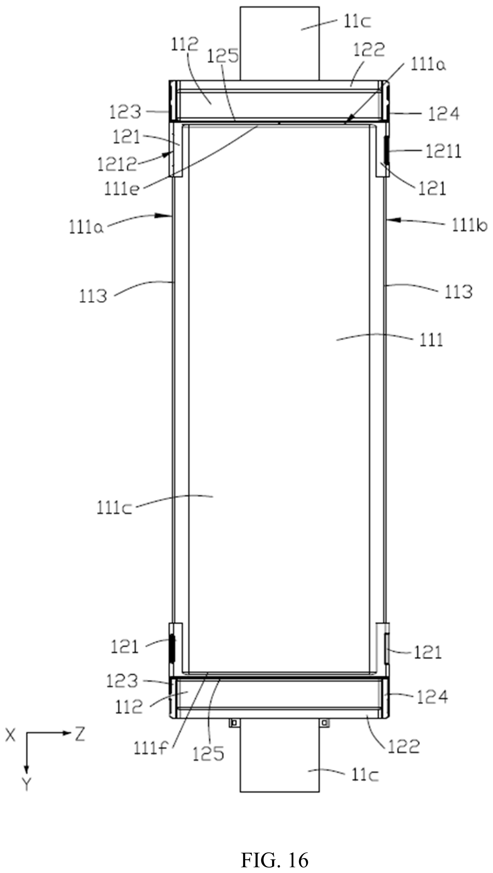

Referring to FIG. 16, in an embodiment, when viewed along the first direction X, in the third direction Z, a part of the first connection portion 112a is located between the body portion 111 and the second portion 122, and in the second direction Y, a part of the first connection portion 112a is located between the first side portion 123 and the second side portion 124. By covering a part of the first connection portion 112a with the bracket 12, protection for the first connection portion 112a is enhanced. By positioning a part of the first connection portion 112a between the body portion 111 and the first portion 121 and between the first side portion 123 and the second side portion 124, a swelling space can be provided for the first sealing portion 112, facilitating pressure relief, reducing the impact of internal pressure of the cell 11 on the first connection portion 112a, reducing the influence on the sealing performance of the first sealing portion 112, and facilitating heat dissipation of the first sealing portion 112.

Referring to FIG. 8 and FIG. 15 to FIG. 18, in an embodiment, the bracket 12 includes a fourth connection portion 125, and the fourth connection portion 125 covers a part of the fifth wall 111e. One end of the fourth connection portion 125 is connected to the first side portion 123, and another end is connected to the second side portion 124, further enhancing the structural strength of the bracket 12. When viewed along the direction Z' opposite to the third direction Z, in the first direction X, the fourth connection portion 125 does not extend beyond the third wall 111c, and the fourth connection portion 125 does not extend beyond the fourth wall 111d. When the body portions 111 of adjacent cells 11 may be in direct contact, and when adjacent cells 11 apply pressure to each other through the body portion 111, the force applied to the first sealing portion 112 can be reduced, enhancing protection for the first sealing portion 112.

In some embodiments, the body portion 111 includes a plurality of fifth walls 111e, and the bracket 12 correspondingly includes a plurality of fourth connection portions 125. Optionally, some of the fifth walls 111e are provided with the fourth connection portion 125. Optionally, each fifth wall 111e is provided with one fourth connection portion 125.

In an embodiment, the bracket 12 includes a third portion 126, and the third portion 126 is connected to a side of the fourth connection portion 125, the side of the fourth connection portion 125 being a side facing the second portion 122. The third portion 126 extends from the fourth connection portion 125 along the third direction Z, and the third portion 126 covers a part of a first sealing portion 112. Through the third portion 126, support and protection can be provided at a joint between the first sealing portion 112 and the fourth connection portion 125, reducing damage to the first sealing portion 112 that affects the sealing performance of the cell 11.

In some embodiments, the body portion 111 includes a plurality of fifth walls 111e, and the bracket 12 includes a plurality of third portions 126 and a plurality of fourth connection portions 125. Optionally, some of the third portions 126 are connected to the fourth connection portion 125. Optionally, each third portion 126 is connected to one fourth connection portion 125.

In an embodiment, along the first direction X, the bracket 12 includes a first protrusion 1211 and a third recess 1212. The third recess 1212 is provided at the first portion 121, and the first protrusion 1211 extends from the first portion 121. When the body portions 111 of adjacent cells 11 are in direct contact, the first protrusion 1211 is disposed in a third recess 1212 of an adjacent bracket 12, and a gap exists between the first protrusion 1211 and the third recess 1212. The adjacent bracket 12 is positioned through the third recess 1212 and the first protrusion 1211, reducing deviation of adjacent body portions 111 and facilitating mutual pressure application between a plurality of body portions 111. The gap between the first protrusion 1211 and the third recess 1212 can reduce the force applied to the bracket 12, enhancing protection for the first sealing portion 112 and enhancing the connection strength between the bracket 12 and the cell 11. Referring to FIG. 8 and FIG. 15 to FIG. 20, in an embodiment, a cell unit 10 includes two brackets 12, where one bracket 12 is connected to a part of one first sealing portion 112, and the other bracket 12 is connected to a part of another first sealing portion 112. One electrode terminal 11c extends from the first sealing portion 112 and the bracket 12 along the third direction Z, and the other electrode terminal 11c extends from the second sealing portion 113 and the bracket 12 along the direction Z' opposite to the third direction Z.

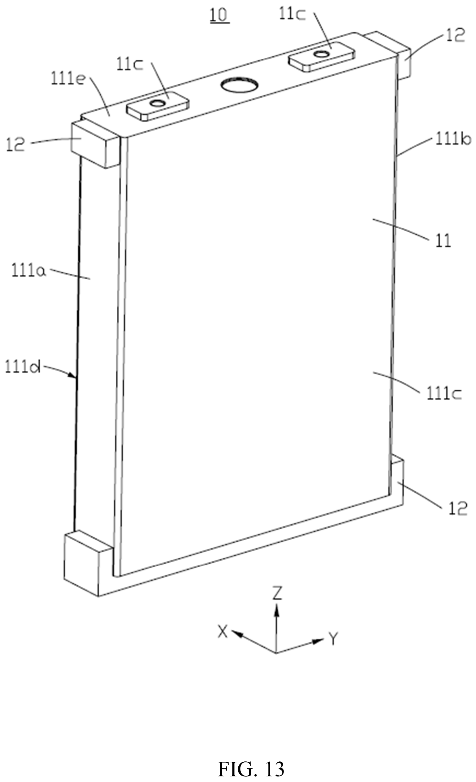

Referring to FIG. 13, in an embodiment, the cell 11 includes a prismatic-housing cell. The prismatic-housing cell includes a hard housing, and the bracket 12 is connected to the hard housing. The prismatic-housing cell is capable of moving relative to the bottom wall 21 through the first portion 121.

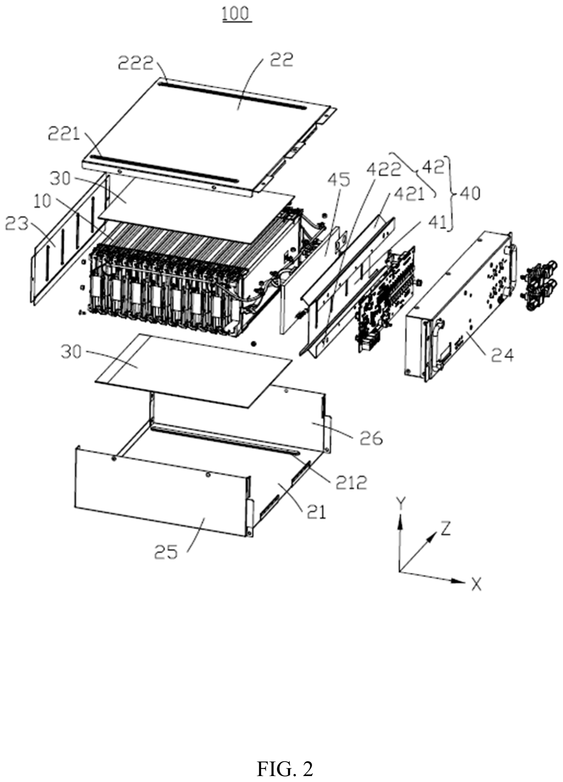

Referring to FIG. 2, FIG. 7, FIG. 15, and FIG. 19 to FIG. 22, in an embodiment, the first portion 121 is connected to the bottom wall 21 through a small number of adhesive members (not shown in the figures), facilitating preliminary positioning of the cell unit 10 when the cell unit 10 is disposed in the housing 20. Optionally, the adhesive member includes glue.

In an embodiment, the first portion 121 is in direct contact with the bottom wall 21, and the first portion 121 is capable of directly moving relative to the bottom wall 21.

In an embodiment, a side of the first portion 121 in contact with the bottom wall 21 is provided with a sliding member (not shown in the figures). The sliding member can reduce a contact area between the first portion 121 and the bottom wall 21, thereby reducing a friction force between the first portion 121 and the bottom wall 21, and facilitating movement of the first portion 121 relative to the bottom wall 21.

In an embodiment, the first portion 121 is formed by extending from the first side portion 123, enhancing the structural strength of the bracket 12.

In an embodiment, the first portion 121 and the first side portion 123 are separately disposed, facilitating adjustment of a position where the first portion 121 covers the first wall 111a.

In an embodiment, the first portion 121 covers a part of the first wall 111a, and the first portion 121 protrudes from the first wall 111a. Along the second direction Y, a third gap 21a exists between the bottom wall 21 and the first wall 111a. Optionally, the first portion 121 covers either one of two ends of the first wall 111a. Optionally, the first portion 121 covers a middle section of the first wall 111a. Optionally, the first portion 121 includes a multi-segment split structure. Optionally, the first portion 121 connects two ends of the first wall 111a along the third direction Z, facilitating movement of the cell unit 10 relative to the bottom wall 21. Optionally, a part of the first portion 121 connects the two ends of the first wall 111a along the third direction Z, and a part of the first portion 121 connects the middle section of the first wall 111a, further facilitating movement of the cell unit 10 relative to the bottom wall 21.

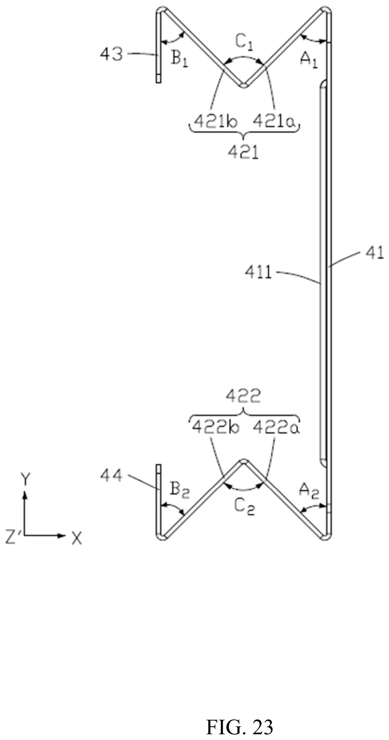

Referring to FIG. 23, in an embodiment, the battery module 100 further includes a filler member 30, and the filler member 30 is disposed in the third gap 21a. The filler member 30 can protect a part of the first wall 111a that is not provided with the first portion 121. Optionally, the filler member 30 has elasticity. Optionally, the filler member 30 includes foam. Optionally, the filler member 30 does not have elasticity.

In an embodiment, the first portion 121 covers a part of the first wall 111a and a part of the second sealing portion 113, protecting the first wall 111a and the second sealing portion 113.

In an embodiment, both the first wall 111a and the second sealing portion 113 are covered with the first portion 121, enhancing protection for the first wall 111a and the second sealing portion 113 by the first portion 121 and further enhancing the connection strength between the bracket 12 and the cell 11.

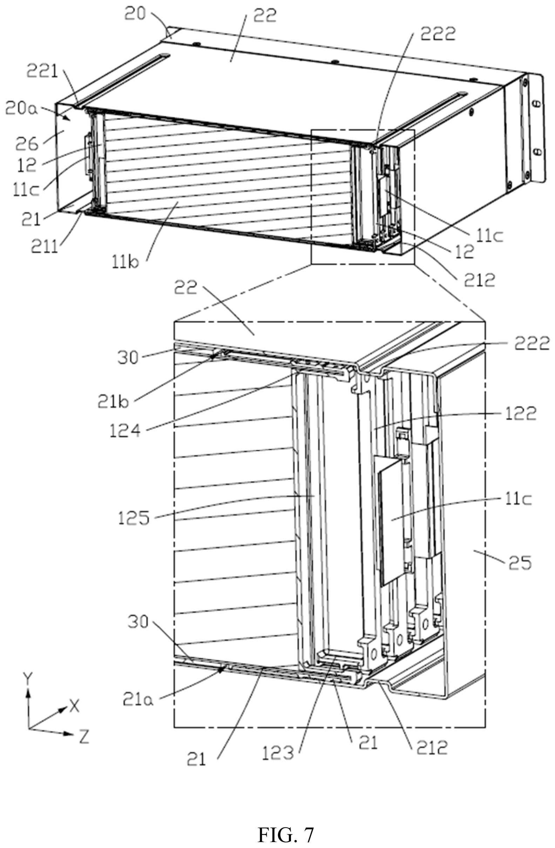

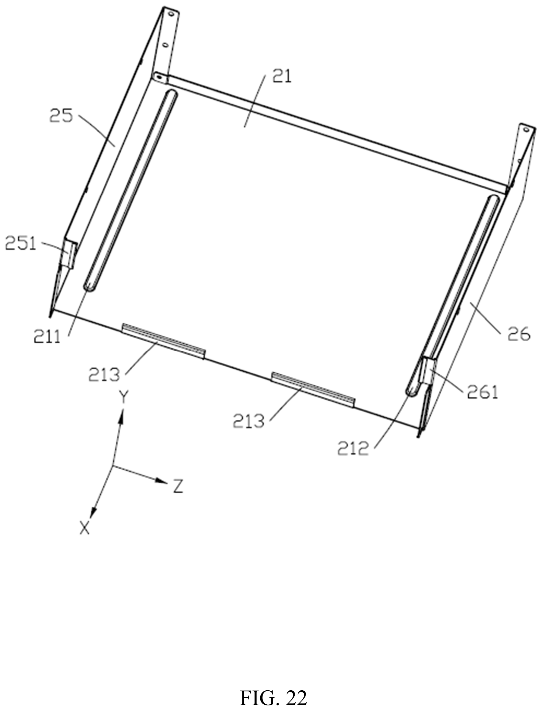

Referring to FIG. 7 and FIG. 22, in an embodiment, the bottom wall 21 is provided with a first limiting portion 211, and the first limiting portion 211 extends along the first direction X. The first portion 121 may be in contact with the first limiting portion 211, and the first limiting portion 211 guides the movement of the cell unit 10. Optionally, the first limiting portion 211 is formed by protruding from the bottom wall 21 along the second direction Y.

In an embodiment, the bottom wall 21 is provided with a second limiting portion 212, and the second limiting portion 212 extends along the first direction X. The first limiting portion 211 and the second limiting portion 212 are spaced apart along the third direction Z. The body portion 111 is located between the first limiting portion 211 and the second limiting portion 212, and the first portion 121 connected to the first wall 111a is located between the first limiting portion 211 and the second limiting portion 212. The first limiting portion 211 and the second limiting portion 212 further guide the movement of the cell unit 10. Optionally, the second limiting portion 212 is formed by protruding from the bottom wall 21 along a second direction Y.

Referring to FIG. 2, FIG. 7, FIG. 15, and FIG. 19 to FIG. 23, in an embodiment, the housing 20 includes a top wall 22, the bottom wall 21 and the top wall 22 are disposed opposite to each other along the second direction Y, and the cell unit 10 is located between the bottom wall 21 and the top wall 22.

In an embodiment, the bracket 12 includes two first portions 121, and the two first portions 121 are disposed opposite to each other along the second direction Y. One first portion 121 covers at least a part of the first wall 111a and is connected to the bottom wall 21, and the other first portion 121 includes covers at least a part of the second wall 111b and is connected to the top wall 22. The first portion 121 are configured to be movable relative to the bottom wall 21 and the top wall 22. The first portions 121 are provided at both the first wall 111a and the second wall 111b, one first portion 121 is capable of moving relative to the bottom wall 21, and the other first portion 121 is capable of moving relative to the top wall 22, thereby enabling the cell unit 10 to move relative to the top wall 22.

In an embodiment, the second side portion 124 is in direct contact with the top wall 22, further facilitating simultaneous movement of the first sealing portion 112 and the body portion 111, and further facilitating protection for the first sealing portion 112.

In an embodiment, the first portion 121 is connected to the top wall 22 through a small number of adhesive members (not shown in the figures), facilitating preliminary positioning of the cell unit 10 when the cell unit 10 is disposed in the housing 20. Optionally, the adhesive member includes glue.

In an embodiment, the first portion 121 is in direct contact with the top wall 22, and the first portion 121 is capable of directly moving relative to the top wall 22.

In an embodiment, a side of the first portion 121 in contact with the top wall 22 is provided with a sliding member (not shown in the figures). The sliding member can reduce a contact area between the first portion 121 and the top wall 22, thereby reducing a friction force between the first portion 121 and the top wall 22, and facilitating movement of the first portion 121 relative to the top wall 22.

In an embodiment, the first portion 121 is formed by extending from the second side portion 124, enhancing the structural strength of the bracket 12.

In an embodiment, the first portion 121 and the second side portion 124 are separately disposed, facilitating adjustment of a position where the first portion 121 covers the second wall 111b.

In an embodiment, the first portion 121 covers a part of the second wall 111b, and the first portion 121 protrudes from the second wall 111b. Along the second direction Y, a fourth gap 21b exists between the top wall 22 and the second wall 111b. Optionally, the first portion 121 covers either one of two ends of the second wall 111b. Optionally, the first portion 121 covers a middle section of the second wall 111b. Optionally, the first portion 121 covering the second wall 111b includes a multi-segment split structure. Optionally, the first portion 121 connects the two ends of the second wall 111b along the third direction Z, facilitating movement of the cell unit 10 relative to the top wall 22. Optionally, a part of the first portion 121 connects the two ends of the second wall 111b along the third direction Z, and a part of the first portion 121 connects the middle section of the second wall 111b, further facilitating movement of the cell unit 10 relative to the top wall 22.

In an embodiment, a filler member 30 is disposed in the fourth gap 21b, and the filler member 30 can protect a part of the second wall 111b that is not provided with the first portion 121. Optionally, the filler member 30 has elasticity. Optionally, the filler member 30 includes foam. Optionally, the filler member 30 does not have elasticity.

In an embodiment, the first portion 121 covers the entire second wall 111b, enhancing protection for the second wall 111b by the first portion 121.

In an embodiment, the first portion 121 covers a part of the second wall 111b and a part of another second sealing portion 113, to protect the second wall 111b and the second sealing portion 113.

In an embodiment, both the second wall 111b and the another second sealing portion 113 are covered with the first portion 121, enhancing protection for the second wall 111b and the second sealing portion 113 by the first portion 121 and further enhancing the connection strength between the bracket 12 and the cell 11.

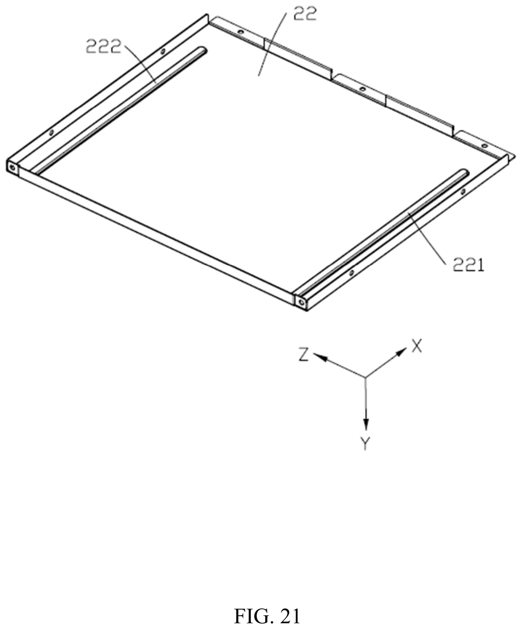

Referring to FIG. 7 and FIG. 21, in an embodiment, the top wall 22 is provided with a third limiting portion 221, and the third limiting portion 221 extends along the first direction X. The first portion 121 may be in contact with the third limiting portion 221. The third limiting portion 221 guides the movement of the cell unit 10. Optionally, the third limiting portion 221 is formed by protruding from the top wall 22 along a direction Y' opposite to the second direction Y.

In an embodiment, the top wall 22 is provided with a fourth limiting portion 222, and the fourth limiting portion 222 extends along the first direction X. The third limiting portion 221 and the fourth limiting portion 222 are spaced apart along the third direction Z. The body portion 111 is located between the third limiting portion 221 and the fourth limiting portion 222, and the first portion 121 connected to the second wall 111b is located between the third limiting portion 221 and the fourth limiting portion 222. The third limiting portion 221 and the fourth limiting portion 222 further guide the movement of the cell unit 10. Optionally, the fourth limiting portion 222 is formed by protruding from the top wall 22 along the direction Y opposite to the second direction Y.

In an embodiment, when the battery module 100 includes two brackets 12, each bracket 12 includes four first portions 121, where two first portions 121 are disposed on two sides of the body portion 111 along the second direction Y, and the other two first portions 121 are disposed on two sides of the body portion 111 along the third direction Z. The first wall 111a is connected to two first portions 121, and the second wall 111b is connected to two first portions 121. Two first portions 121 are provided at both the first wall 111a and the second wall 111b, and the two first portions 121 are capable of moving relative to the bottom wall 21 and the top wall 22, further facilitating movement of the cell unit 10 relative to the bottom wall 21 and the top wall 22.

Referring to FIG. 2 and FIG. 7, in an embodiment, the housing 20 includes a rear wall 23, a front wall 24, a first sidewall 25, and a second sidewall 26. The rear wall 23 and the front wall 24 are disposed along the first direction X, and the first sidewall 25 and the second sidewall 26 are disposed along the third direction Z. The rear wall 23 connects the first sidewall 25 and the second sidewall 26; the front wall 24 connects the first sidewall 25 and the second sidewall 26; the bottom wall 21 connects the rear wall 23, the front wall 24, the first sidewall 25, and the second sidewall 26; and the top wall 22 connects the rear wall 23, the front wall 24, the first sidewall 25, and the second sidewall 26, forming a first space 20a. A plurality of cell units 10 are disposed in the first space 20a.

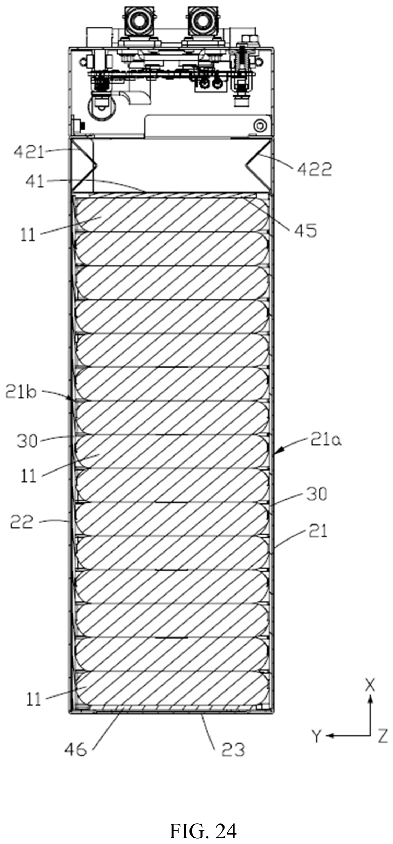

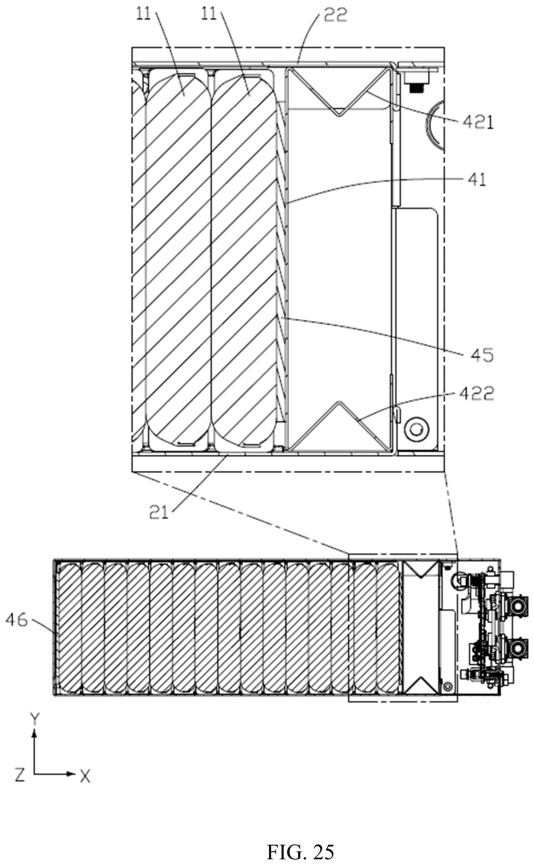

Referring to FIG. 2 and FIG. 23 to FIG. 25, in an embodiment, the battery module 100 further includes a first elastic member 40. In the first direction X, a plurality of cell units 10 and the first elastic member 40 are arranged along the first direction X. Optionally, along the first direction X, the plurality of cell units 10 and the first elastic member 40 are arranged. Optionally, along the first direction X, the first elastic member 40 and the plurality of cell units 10 are arranged. In this application, along the first direction X, the first elastic member 40 is located between the plurality of cell units 10 and the front wall 24. In other embodiments, along the first direction X, the first elastic member 40 is located between the front wall 24 and the plurality of cell units 10.

The first elastic member 40 is disposed between the cell unit 10 and the housing 20. When the cell 11 swells, the first elastic member 40 can be compressed by the cell 11, thereby providing a swelling space for the cell 11, buffering a compressive force applied to the cell unit 10, and reducing the impact on the service life of a battery module 100.

In an embodiment, the first elastic member 40 is configured to apply pressure to the plurality of cell unit 10, and a plurality of cell units 10 arranged along the first direction X are in a pressurized state.

In an embodiment, when the cell 11 does not swell, the first elastic member 40 provides a compressive force to the cell 11. When the cell 11 swells, the cell 11 moves between the bottom wall 21 and the top wall 22, and the first elastic member 40 provides a swelling space for the cell 11 and continuously applies more pressure to a plurality of cell units 10, achieving dynamic balance of the plurality of cell units 10.

In an embodiment, when the cell 11 does not swell, the first elastic member 40 does not apply pressure to the cell unit 10. When the cell 11 swells, the cell 11 compresses the first elastic member 40, and the first elastic member 40 provides a swelling space for the cell 11 and continuously applies more pressure to a plurality of cell units 10, achieving dynamic balance of the plurality of cell units 10.

In an embodiment, the first elastic member 40 includes a base portion 41 and a folded portion 42. The base portion 41 is connected to the folded portion 42, and the folded portion 42 is fixedly connected to the housing 20. The base portion 41 is configured to apply pressure to the plurality of cell unit 10, and the folded portion 42 is configured to provide a swelling space for the cell unit 10.

In some embodiments, the base portion 41 is connected to a body portion 111 of an outermost cell 11. The base portion 41 is provided with a plurality of protrusions 411 spaced apart along the third direction Z. The protrusion 411 is formed by recessing a side of the base portion 41 facing the body portion 111 toward a direction away from the body portion 111, enhancing the structural strength of the base portion 41 and reducing the risk of deformation of the base portion 41 due to uneven force applied to the base portion 41.

In some embodiments, the folded portion 42 includes a first folded portion 421 and a second folded portion 422. Along the second direction Y, the first folded portion 421 is connected to one side of the base portion 41, and the second folded portion 422 is connected to another two sides of the base portion 41. In another embodiment, along the third direction Z, the first folded portion 421 is connected to one side of the base portion 41, and the second folded portion 422 is connected to another side of one side of the base portion 41. The first folded portion 421 and the second folded portion 422 are capable of acting on the cell unit 10 through the base portion 41, and the first folded portion 421 and the second folded portion 422 can provide a swelling space for the cell unit 10.

In some embodiments, the first elastic member 40 includes a first connection section 43. The first connection section 43 is connected to a side of the first folded portion 421, the side of the first folded portion 421 being a side facing away from a base portion 41. The first connection section 43 is fixed to the housing 20, and the first folded portion 421 is fixed to the housing 20 through the first connection section 43, transferring the force applied to the first folded portion 421 to the housing 20.

In some embodiments, the first connection section 43 is parallel to the base portion 41, facilitating deformation of the first elastic member 40 in the first direction X.

In some embodiments, the first elastic member 40 includes a second connection section 44. The second connection section 44 is connected to a side of the second folded portion 422, the side of the second folded portion 422 being a side facing away from the base portion 41. The second connection section 44 is fixed to the housing 20, and the second folded portion 422 is fixed to the housing 20 through the second connection section 44, transferring the force applied to the folded portion 42 to the housing 20.

In some embodiments, the second connection section 44 is parallel to the base portion 41, facilitating deformation of the first elastic member 40 in the first direction X.

In some embodiments, the first sidewall 25 is provided with a first fixed portion 251. Along the first direction X, a projection of the first connection section 43 overlaps a projection of the first fixed portion 251, and the first connection section 43 is fixed to the first fixed portion 251, for example, fixed by welding, adhesion, abutment, clamping, or a screw. In some embodiments, the second sidewall 26 is provided with a second fixed portion 261. Along the first direction X, a projection of the first connection section 43 overlaps a projection of the second fixed portion 261, and the first connection section 43 is fixed to the second fixed portion 261, for example, fixed by welding, adhesion, abutment, clamping, or a screw.

In some embodiments, the first fixed portion 251 is closer to the cell unit 10 than the first connection section 43, facilitating fixation of the first fixed portion 251 to the first connection section 43.

In some embodiments, the second fixed portion 261 is closer to the cell unit 10 than the first connection section 43, facilitating fixation of the second fixed portion 261 to the first connection section 43.

In some embodiments, the structural strength of the first sidewall 25 is greater than the structural strength of the first elastic member 40, reducing the risk of deformation of the first sidewall 25 due to the force applied to the first folded portion 421.

In some embodiments, the structural strength of the second sidewall 26 is greater than the structural strength of the first elastic member 40, reducing the risk of deformation of the second sidewall 26 due to the force applied to the first folded portion 421.

In some embodiments, a thickness of the first sidewall 25 is greater than a maximum one of thicknesses of the base portion 41, the first folded portion 421, and the first connection section 43, enhancing the structural strength of the first sidewall 25 and reducing the risk of deformation of the first sidewall 25 due to the force applied to the first folded portion 421.

In some embodiments, a thickness of the second sidewall 26 is greater than a maximum one of thicknesses of the base portion 41, the first folded portion 421, and the first connection section 43, enhancing the structural strength of the second sidewall 26 and reducing the risk of deformation of the second sidewall 26 due to the force applied to the first folded portion 421.

In some embodiments, the bottom wall 21 is provided with a third fixed portion 213. Along the first direction X, a projection of the second connection section 44 overlaps a projection of the third fixed portion 213, and the second connection section 44 is fixed to the third fixed portion 213. Optionally, the bottom wall 21 is provided with a plurality of third fixed portions 213, the plurality of third fixed portions 213 are spaced apart along the third direction Z, and the second connection section 44 is fixed to the plurality of third fixed portions 213, enhancing the connection strength between the second connection section 44 and the bottom wall 21. For example, fixation is achieved by welding, adhesion, abutment, clamping, or a screw.

In some embodiments, the third fixed portion 213 is closer to the cell unit 10 than the second connection section 44, facilitating fixation of the third fixed portion 213 to the second connection section 44.

In some embodiments, the structural strength of the bottom wall 21 is greater than the structural strength of the first elastic member 40, reducing the risk of deformation of the bottom wall 21 due to the force applied to the first folded portion 421.

In some embodiments, a thickness of the bottom wall 21 is greater than a maximum one of thicknesses of the base portion 41, the second folded portion 422, and the second connection section 44, enhancing the structural strength of the bottom wall 21 and reducing the risk of deformation of the bottom wall 21 due to the force applied to the second folded portion 422.

In some embodiments, the first folded portion 421 includes a first folded section 421a and a second folded section 421b, where the first folded section 421a is connected to the base portion 41, and the second folded section 421b is connected to the first folded section 421a and the first connection section 43. The first folded section 421a and the base portion 41 form a first included angle A₁, the second folded section 421b and the first connection section 43 form a second included angle B₁, the first folded section 421a and the second folded section 421b form a third included angle C₁, and A₁ ≥ B₁, helping to improve the deformation resistance of the first folded section 421a and reducing the risk of deformation of the first elastic member 40 in the first direction X.

In some embodiments, C₁ > A₁, helping to improve uniform deformation of the first folded portion 421.

In some embodiments, C₁ = 2B₁ = 2A₁, helping to further improve uniform deformation of the first folded portion 421.

In some embodiments, the second folded portion 422 includes a third folded section 422a and a fourth folded section 422b, where the third folded section 422a is connected to the base portion 41, and the fourth folded section 422b is connected to the third folded section 422a and the second connection section 44. The third folded section 422a and the base portion 41 form a first included angle A₂, the fourth folded section 422b and the second connection section 44 form a second included angle B₂, the third folded section 422a and the fourth folded section 422b form a third included angle C₂, and A₂ ≥ B₂, helping to improve the deformation resistance of the third folded section 422a and reducing the risk of deformation of the first elastic member 40 in the first direction X.

In some embodiments, C₂ > A₂, helping to improve uniform deformation of the second folded portion 422.

In some embodiments, C₂ = B₂ = 2A₂, helping to further improve uniform deformation of the second folded portion 422.

In some embodiments, the first folded portion 421 and the second folded portion 422 have a same structure, facilitating uniform force distribution and deformation. Optionally, the second folded portion 422 is disposed at a same angle as the first folded portion 421. When the first folded portion 421 and the second folded portion 422 are applied with a force, they are capable of receiving a uniform force and deforming uniformly, reducing the risk of rotation of the first elastic member 40 due to uneven deformation. Optionally, A₁ = A₂, B₁ = B₂, and C₁ = C₂.

In an embodiment, the second elastic member 45 is disposed between the first elastic member 40 and the cell 11. The second elastic member 45 is capable of being compressed, further providing a swelling space for the cell 11 and further applying pressure to the cell 11. Optionally, the second elastic member 45 includes foam.

In an embodiment, a third elastic member 46 is disposed between the rear wall 23 and the cell 11. The third elastic member 46 is capable of being compressed, further providing a swelling space for the cell 11 and further applying pressure to the cell 11. Optionally, the third elastic member 46 includes foam.

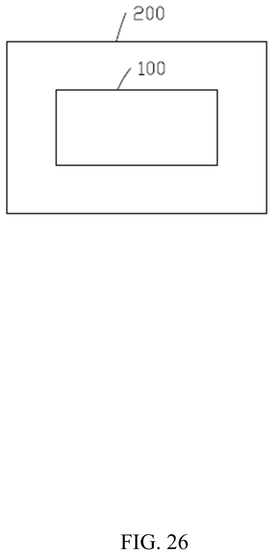

Referring to FIG. 26, this application further provides an electric device 200 using the foregoing battery module 100. In an embodiment, the electric device 200 includes, but is not limited to, an electronic device, a drone, a backup power source, an electric vehicle, an electric motorcycle, an electric bicycle, an electric tool, or a large household storage battery module.

Those of ordinary skill in the art should appreciate that some foregoing embodiments are for description of this application only and not for limiting this application. Appropriate modifications and variations made to some foregoing embodiments without departing from the essential spirit and scope of this application all fall within the scope of this application.

## Claims

1. A battery module, comprising:
a plurality of cell units arranged along a first direction, each cell unit comprises a cell and a bracket; and the cell comprises an electrode assembly, a cell housing, and an electrode terminal connected to the electrode assembly and led out of the cell housing;
wherein the cell housing comprises a body portion, the electrode assembly is disposed in the body portion, and the body portion comprises a first wall and a second wall arranged along a second direction;
the bracket comprises a first portion, the first portion covering at least a part of the first wall;
the battery module further comprises a housing, the housing comprises a bottom wall, the first portion is connected to the bottom wall; the bottom wall, the first portion, and the cell unit are arranged along the second direction; and
along the first direction, the first portion is configured to be movable relative to the bottom wall, and the second direction is perpendicular to the first direction.

2. The battery module according to claim 1, wherein the first portion is in direct contact with the bottom wall.

3. The battery module according to claim 1 or 2, wherein the cell housing comprises a first sealing portion, the first sealing portion extends from the body portion, the first sealing portion comprises a first connection portion, the bracket comprises a second portion covering at least a part of the first connection portion, and the electrode terminal extends from the first connection portion.

4. The battery module according to claim 3, wherein the first sealing portion comprises a first folded portion and a second folded portion disposed opposite to each other along the second direction, and the first folded portion is connected to the second folded portion through the first connection portion; and
the bracket comprises a first side portion covering the first folded portion and a second side portion covering the second folded portion.

5. The battery module according to claim 4, wherein, when viewed along the first direction, in the second direction, a part of the first connection portion is located between the body portion and the second portion; when viewed along the first direction in a third direction, a part of the first connection portion is located between the first side portion and the second side portion; and the first direction, the second direction, and the third direction are perpendicular to each other.

6. The battery module according to claim 4 or 5, wherein the first side portion is in direct contact with the bottom wall.

7. The battery module according to any one of claims 1 to 6, wherein the bottom wall is provided with a first limiting portion and a second limiting portion, the first limiting portion and the second limiting portion are spaced apart along the third direction, and the first portion is located between the first limiting portion and the second limiting portion.

8. The battery module according to any one of claims 1 to 7, wherein the housing comprises a top wall; the bottom wall and the top wall are disposed opposite to each other along the second direction;
the bracket comprises two first portions, and the two first portions are disposed opposite to each other along the second direction;
one of the two first portions is connected to the bottom wall, and is configured to be movable relative to the bottom wall; and
the other of the two first portions covers at least a part of the second wall, and is connected to the top wall, and the other of the two first portions is configured to be movable relative to the top wall.

9. The battery module according to claim 8, wherein the top wall is provided with a third limiting portion and a fourth limiting portion, the third limiting portion and the fourth limiting portion are spaced apart along the third direction, and the first portion connected to the top wall is located between the third limiting portion and the fourth limiting portion.

10. The battery module according to any one of claims 1 to 9, further comprising a first elastic member, wherein the plurality of cell units and the first elastic member are arranged in the first direction, and the first elastic member is configured to provide a swelling space for the cell.

11. The battery module according to claim 10, wherein the first elastic member is configured to apply pressure to the plurality of cell units;

12. The battery module according to claim 11, wherein the first elastic member comprises a base portion and a folded portion, the base portion is connected to the folded portion, the folded portion is fixed to the housing, the base portion is configured to apply pressure to the plurality of cell units, and the folded portion is configured to provide a swelling space for the plurality of cell units.

13. The battery module according to claim 12, wherein the folded portion comprises a first folded portion and a second folded portion, the first folded portion is disposed opposite to the second folded portion along the second direction, the first folded portion is connected to one side of the base portion, and the second folded portion is connected to another side of the base portion.

14. The battery module according to claim 13, wherein the first elastic member comprises a first connection section, the first connection section is connected to a side of the first folded portion, the side of the first folded portion being a side facing away from the base portion, and the first connection section is fixed to the housing.

15. The battery module according to claim 13, wherein the first folded portion comprises a first folded section and a second folded section, the first folded section is connected to the base portion and the second folded section, and the second folded section is connected to the first connection section.

16. The battery module according to claim 15, wherein the first folded section and the base portion form a first included angle A₁, the second folded section and the first connection section form a second included angle B₁, and A₁ ≥ B₁.

17. The battery module according to claim 16, wherein the first folded section and the second folded section form a third included angle C₁, and C₁ > A₁.

18. The battery module according to claim 17, wherein C₁ = 2 A₁ = 2 B₁.

19. The battery module according to any one of claims 14 to 17, wherein the housing comprises a first sidewall, the first sidewall is provided with a first fixed portion, and along the first direction, a projection of the first connection section overlaps a projection of the first fixed portion, and the first connection section is fixed to the first fixed portion.

20. The battery module according to claim 19, wherein structural strength of the first sidewall is greater than structural strength of the first elastic member.

21. The battery module according to any one of claims 14 to 20, wherein the first elastic member comprises a second connection section, the second connection section is connected to a side of the second folded portion away from the base portion, and the second connection section is fixed to the housing.

22. The battery module according to claim 21, wherein the bottom wall is provided with a third fixed portion; along the first direction, a projection of the second connection section overlaps a projection of the third fixed portion; and the second connection section is fixed to the third fixed portion.

23. The battery module according to any one of claims 13 to 22, wherein the first folded portion and the second folded portion have a same structure.

24. The battery module according to any one of claims 1 to 23, wherein along the second direction, a third gap exists between the first wall and the bottom wall.

25. The battery module according to claim 24, further comprising a filler member, wherein the filler member is disposed in the third gap.

26. The battery module according to any one of claims 1 to 25, wherein body portions of adjacent cell housings are in direct contact.

27. The battery module according to any one of claims 1 to 26, wherein the cell housing comprises a third wall and a fourth wall; along the first direction, the third wall is disposed opposite to the fourth wall; and
when viewed along a direction opposite to the third direction, in the first direction, the first portion does not extend beyond the third wall, and the first portion does not extend beyond the fourth wall.

28. The battery module according to claim 27, wherein the electrode assembly is a wound structure comprising a first straight section, a second straight section, a first curved section, and a second curved section; the first straight section connects the first curved section and the second curved section; the second straight section connects the first curved section and the second curved section; and
along the first direction, a projection of the third wall covers a projection of the first straight section, and a projection of the fourth wall covers a projection of the second straight section.

29. The battery module according to claim 28, wherein along the first direction, a projection of the first portion overlaps a projection of the first curved section, the projection of the first portion and a projection of the first straight section are spaced apart from each other, and the projection of the first portion and a projection of the second straight section are spaced apart from each other.

30. The battery module according to any one of claims 1 to 29, wherein the bracket is integrally formed with the cell.

31. The battery module according to any one of claims 1 to 30, wherein the bracket is an insulating bracket.

32. An electric device, comprising the battery module according to any one of claims 1 to 31.
